# EUROPEAN PATENT SPECIFICATION

(11) **EP 3 878 668 B1**
(45) Date of publication and mention of the grant of the patent: **20.12.2023**
(21) Application number: 21161764.2
(22) Date of filing: 10.03.2021
(51) Int. Cl.: B60C 17/02, B60C 23/00

(54) **WHEEL FOR A VEHICLE COMPRISING AN IMPROVED SAFETY SYSTEM**
RAD FÜR EIN FAHRZEUG MIT EINEM VERBESSERTEN SICHERHEITSSYSTEM
ROUE POUR VÉHICULE COMPRENANT UN SYSTÈME DE SÉCURITÉ AMÉLIORÉ

(30) Priority: 11.03.2020 IT 202000005185
(43) Date of publication of application: 15.09.2021
(73) Proprietor: CNH Industrial Italia S.p.A., 10156 Torino (IT)
(72) Inventor: Loprevite, Mauro, 10099 San Mauro Torinese (TO) (IT); Russo, Francesca, 10153 Torino (TO) (IT)
(74) Representative: CNH Industrial IP Department

(56) References cited:
- EP-A1- 1 389 540
- EP-A1- 1 637 360
- CN-A- 106 608 149
- JP-A- H0 538 907
- JP-A- 2004 090 807
- JP-A- 2004 330 985
- US-A1- 2001 035 247

## Description

### TECHNICAL FIELD

The present invention relates to a wheel safety system, in particular wheel safety system for allowing the driving of the vehicle in case of tire collapse and, preferably, for a heavy vehicle such as a truck.

### BACKGROUND OF THE INVENTION

Although wheels are commonly considered a very simple system with respect to the remaining parts of a vehicle, they are essential parts of the vehicle in view of driving security.

Indeed, it is known that the collapse of pressure in a tire for an explosion or simply for the rupture of the tire due to the wear of the same may lead to potential mortal accidents if the vehicle is driving.

In order to solve the above issue, it is known to provide a safety system comprising an air bag located inside between the tire and the wheel rim, i.e. in the space that contains the pressurized air when the tire is correctly operating.

When the air pressure decreases suddenly in the tire, automatic systems are voted to inflate such airbags so that the airbag will occupy the space that was pressurized in precedence. In this way, the air bag may support for a while the collapsed tire so that the driver may safely stop the vehicle.

Examples of such air bag systems are shown in documents US2005010949 A1, JP2006151090 A, EP1389540A1, JP2004330985A, CN106608149A, JPH0538907A, US2001/035247A1, JP2004090807A or EP1637360A1

However, the safety systems as disclosed in the above documents cannot achieve a sufficient resistant structure to support the loads of a vehicle, in particular of a heavy vehicle such as a truck.

Therefore, the need is felt to improve existing safety systems for wheels to further increase their support capacity while maintaining at the same time a low weight and cost.

An aim of the present invention is to satisfy the above mentioned needs in a cost effective and optimized way.

### SUMMARY OF THE INVENTION

The aforementioned aim is reached by a wheel comprising a safety system and a vehicle as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view showing a vehicle comprising a wheel provided with a safety system according to the invention;
- Figure 2 is a schematic diametric sectional view of a wheel provided with safety system according to the invention in a first operative condition; and
- Figure 3 is a schematic diametric sectional view of a wheel provided with safety system according to the invention in a second operative condition.

### DETAILED DESCRIPTION OF THE INVENTION

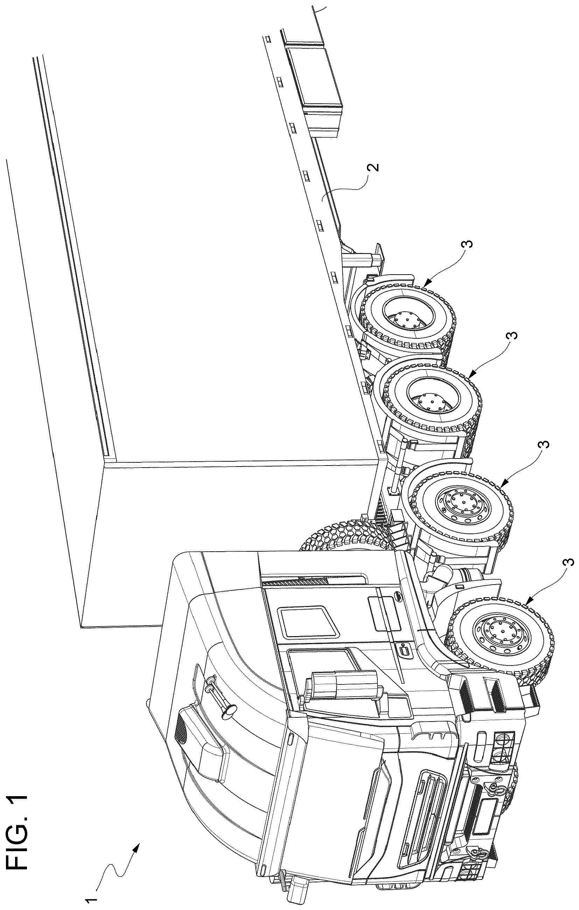

Figure 1 discloses with reference 1 a vehicle, in particular a heavy vehicle such as a truck comprising a chassis 2 movably with respect to the ground thanks to a plurality of wheels 3.

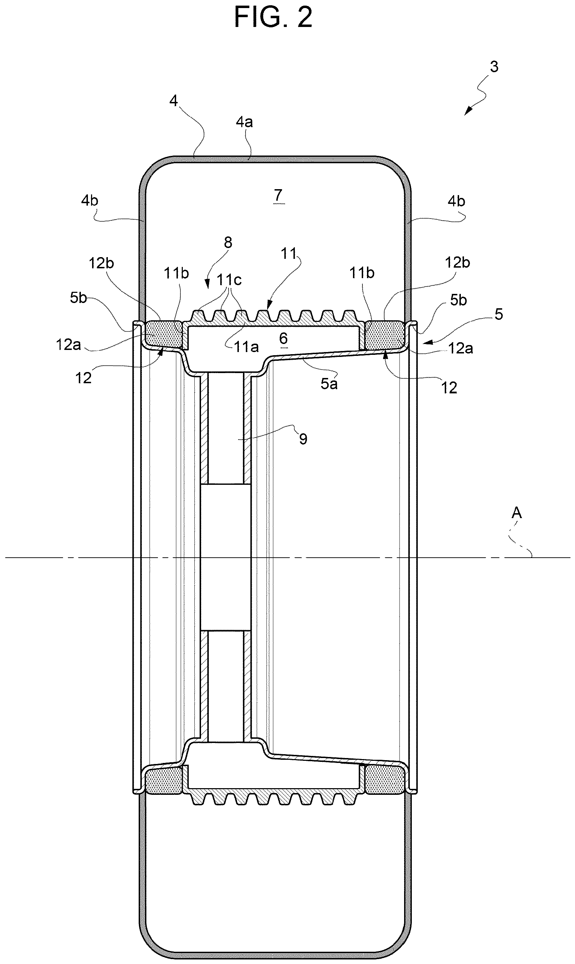

Figure 2 discloses a sectional view of the wheels 3 comprising a tire 4 and a rim 5. As per se known the tire 4 is supported by the rim 5, in particular, when in operation, in a tight manner.

In particular, but exemplarily, the rim 5 represented in the attached drawings has a shape that is usually used in the field of heavy vehicles. However, it is clear that any typology of rim 5 may be used instead of the disclosed one.

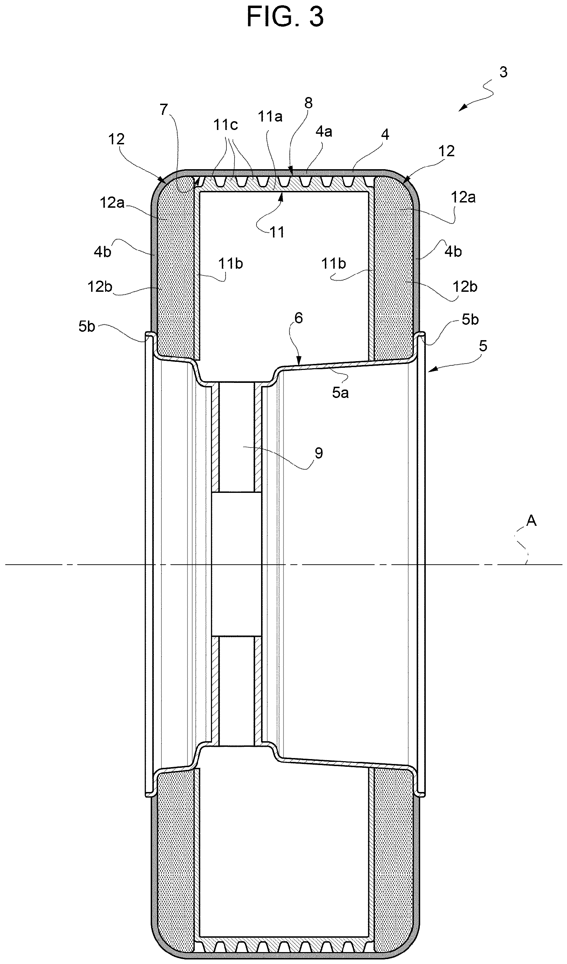

The rim 5, as per se known, comprises an annular portion 5a extending circumferentially about an axis A of rotation of the wheel 3 and configured to cooperate with a disk (not shown) configured to be coupled with a hub (not shown in figures 2 and 3) carried by an axle of the vehicle for imparting the torque to make the wheel 3 rotate.

The annular portion 5a can have different cross-sectional shapes but, essentially, defines a plurality of substantially cylindrical or conical surfaces extending abut axis A and connected one with respect to the other.

The rim 5 further comprises, a front and a rear edges 5b each extending radially, i.e. in a direction perpendicularly with respect axis A, from annular portion 5a. In particular, the front and rear edges 5b each extends from the rear and front perimeter of the annular portion 5a.

Accordingly, the rim 5 defines a seat 6 comprises along the direction of axis A between front and rear edges 5b and radially delimited by annular portion 5a from one side and opened on the opposite side.

The tire 4, as known, comprises a contact portion 4a configured to cooperate with the road and a pair of lateral portions 4b configured to cooperate with the front and rear edges 5b and the annular portion 5a to be coupled to the rim. In particular, the tire 4 defines with the rim 5 a closed space 7; as known, such space 7 is in tight condition with respect to the environment when containing compressed air that can be inflated thanks to valve means carried by the tire 4.

In view of the above configuration it is clear that the aforementioned seat 6 defined by rim 5 is a portion comprises within the closed space 7
The wheel 3 further comprises safety means 8, advantageously housed in the seat 6 and configured to be inflated to occupy all the closed space 7 till arriving in adherence with the tire 4 when the pressure inside such closed space 7 decreases below a predetermined threshold.

The control of the inflation of such safety means 8 may be realized thanks to a closed loop control of the pressure inside the closed space 7. Preferably such closed loop control may be realized thanks to pressure detection means (not shown) carried by the wheel and configured to send a related signal to an electronic control unit configured to control a pump or a valve (not shown) configured to allow pressurized air flow into safety means 8 to allow their inflation.

In schematic drawings of figures 2 and 3 it is shown, merely for simplicity, a channel 9 for allowing the fluidic communication between the safety means 8 with a source of fluid in pressure to inflate these latter.

The electronic unit can be carried either by the wheel 3 or being part of an ECU of the vehicle 1. Obviously the electronic unit comprises elaboration means configured to receive the signal from pressure detection means, elaborate this latter and memorize values configured to be used in the preceding mentioned elaboration.

According to an aspect of the invention, the safety means 8 comprises central element 11 and a pair of lateral elements 12 disposed rearward and forward with respect to central element 11. The central element 11 and the pair of lateral elements 12 are realized in different materials and configured to be inflated together at the same time.

Central element 11 comprises a tire-like structure comprising a central portion 11a and a pair of lateral portions 11b. Preferably central portion 11a and the lateral portions 11b are realized as one piece. The central portion 11 preferably defines a plurality of teeth 11c extending radially from the central portion 11a.

The lateral elements 12 may advantageously comprise a core element 12a and an elastic case 12b configured to surround the core element 12a, in particular adherent to its external surface, so as to contain the core element 12a in tight manner. In other words, the lateral elements 12 each define a pouch-like structure.

Preferably the core element 12a comprises polyurethane foam while the casing 12b is realized in elastic material. The polyurethane foam is in a non-expanded condition when the safety means 8 are not activated (figure 2) and in an expanded condition when the safety means 8 are activated (figure 3), as explained below.

In particular, such casing 12b cooperates at contact with lateral portions 11b of the tire like structure of central element 11. In particular, such contact cooperation is realized by a thermal welding between the casing 12b with the external surface of lateral portions 11b.

Advantageously, the central element 11a is realized in a multi-layer material comprising:
- An inner layer comprising metallic fibers;
- An intermediate layer comprising polyamide fibers; and
- An outer layer comprising rubber.

In particular, when the safety means 8 are activated, i.e. in contact with the ground instead of the tire 4, the inner layer is voted to confer resistance to the central element 11a, the intermediate layer to confer to the latter toughness and the outer layer to provide good adherence to the ground.

The operation of a wheel comprising the safety means 8 according to the present invention as disclosed above is the following.

Figure 2 discloses a first operation condition into which the closed space 7 is full of compressed air at a pressure higher than the atmospheric pressure and therefore the tire 4 can support the load imparted by the hub to the wheel 3 and therefore to rim 5 and discharge such load to the ground.

When the pressure suddenly decreases, the pressure detection means send a related signal to electronic control unit that will compare the pressure signal with respect to a threshold pressure memorized in the electronic control unit. If such signal is lower than the memorized threshold value, then the electronic control unit will control the inflation means (or the valve means) to allow the passage of compressed air into safety means 8.

Accordingly, the central element 11 will inflate and the lateral elements 12 will expanded due to the expansion of polyurethane foam of core portion 12a so that they will reach the configuration represented in figure 3, i.e. occupying all the closed space 7 till adhering to the tire 4. When in such inflated condition, the central element 11 will act in order to substitute the tire 4 in supporting the loads imparted by the rim 5 and the lateral elements 12 will provide lateral support to strength the central element 11 to be have a mechanical behavior similar to an emergency tire.

In view of the foregoing, the advantages of a wheel 3 comprising an improved safety means 8 according to the invention are apparent.

The proposed structure guarantees a stronger structure with respect to known system. Furthermore, such structure is much more similar to a real tire, when used, therefore it allows the driver to safely reach a stop safe position.

In particular, such stronger structure can be used for heavy vehicles such as buses or trucks.

Moreover, the proposed structure is particularly light and realized with cheap material thereby having a low cost. Furthermore, the housing of the latter in its seat in the rim allows to not modify the existing wheel profiles, in other words it can be housed in many different typologies of wheels.

It is clear that modifications can be made to the described wheel comprising an improved safety system which do not extend beyond the scope of protection defined by the claims.

For example, as already said, the shape or typology of rim 5 or wheel 3 may vary. The electronic control unit and the furnishing of compressed fluid may be realized in different ways.

Furthermore, it is clear that the material, shapes and positioning of the elements making part of the safety system may vary according to the limitations set in the claims.

## Claims

1. - Wheel (3) for a vehicle (1) comprising a rim (5) configured to be coupled to a hub of said vehicle and a tire (4) cooperating at contact with said rim (5) to define a closed space (7) with respect to said rim (5), said closed space (7) being configured to contain compressed air for supporting said vehicle (1) with respect to the ground, said wheel (3) comprising safety means (8) housed into said closed space (7) and configured to be inflated when the pressure in said closed space (7) decreases below a preset threshold, said safety means (8) comprises a central element (11) and a first and a second lateral elements (12) respectively interposed forward and rearward to said central element (11), said central element (11) and said lateral elements (12) being realized in different materials, said central element (11) being configured to be inflated when the pressure in said closed space (7) decreases below a preset threshold, said central element (11) carrying said lateral elements (12) to expand together with said central element (11) till they all contact said tire (4),
the wheel (3) is **characterized in that** said central element (11) comprises:
- an inner layer comprising metallic fibers;
- an intermediate layer comprising polyamide fibers; and
- an outer layer comprising rubber.

2. - Wheel according to claim 1, wherein said central element (11) comprises a plurality of radial teeth.

3. - Wheel according to any of the preceding claims, wherein each of said lateral elements (12) comprises a core element (12a) comprising polyurethane form and a casing (12b) surrounding in tight manner said core element (12a).

4. - Wheel according to any of the preceding claims, wherein each of said lateral elements (12) cooperates at contact with said central element (11).

5. - Wheel according to any of the preceding claims, wherein said rim (5) comprises a annular portion (5a) and a pair of edge portions (5b), said rim (5) defining a seat (6) delimited in one direction between said edge portions (5b) and radially delimited from one side by said annular portion (5a) and opened to said closed space (7) on the opposite side, said safety means (8) being housed in said seat (6) so that they can expand, when inflated, in said closed space (7) .

6. -Wheel according to any of the preceding claims, further comprising channels (9) configured to allow the fluidic communication between said safety means (8) and a source of fluid in pressure of said vehicle.

7. -Wheel according to any of the preceding claims, further comprising sensor means configured to detect the pressure inside said closes space (7).

8. - Wheel according to claim 7 when depending on claim 6, further comprising an electronic unit electrically connected to said sensor means and configured to compare said detected pressure with a reference pressure memorized in said electronic unit, said electronic unit allowing the passage of fluid from said source to said safety means (8) when said detected pressure is lower with respect to said reference pressure.

9. Vehicle (1) comprising a chassis (3) and a plurality of wheels (3) according to any of the preceding claims.

10. Vehicle (1) comprising a chassis (3), a plurality of wheels (3) according to any of claims 1 to 7, a pressure source and an electronic unit configured to be electrically connected to said sensor means and configured to compare said detected pressure with a reference pressure memorized in said electronic unit, said electronic unit allowing the passage of fluid from said source to said safety means (8) when said detected pressure is lower with respect to said reference pressure.

## Patentansprüche

1. Rad (3) für ein Fahrzeug (1), das eine Felge (5), die dazu eingerichtet ist, mit einer Nabe des Fahrzeugs gekoppelt zu sein, und einen Reifen (4) aufweist, der in Kontakt mit der Felge (5) zusammen wirkt, um einen geschlossenen Raum (7) in Bezug zu der Felge (5) zu definieren, wobei der geschlossene Raum (7) dazu eingerichtet ist, Druckluft zum Tragen des Fahrzeugs (1) in Bezug auf den Boden zu fassen, wobei das Rad (3) eine Sicherheitsvorrichtung (8) aufweist, die in dem geschlossenen Raum (7) aufgenommen ist und dazu eingerichtet ist, luftgefüllt zu sein, wenn der Druck in dem geschlossenen Raum (7) unter einen vorbestimmten Grenzwert fällt, wobei die Sicherheitsvorrichtung (8) ein mittiges Element (11) und ein erstes und ein zweites seitliches Element (12) aufweist, die entsprechend vor und hinter dem mittigen Element (11) eingefügt sind, wobei das mittige Element (11) und die seitlichen Elemente (12) aus unterschiedlichen Materialien ausgebildet sind, wobei das mittige Element (11) dazu eingerichtet ist, luftgefüllt zu sein, wenn der Druck in dem geschlossenen Raum (7) unter einen vorbestimmten Grenzwert fällt, wobei das mittige Element (11) die seitlichen Elemente (12) trägt, um sich zusammen mit dem mittigen Element (11) auszudehnen, bis sie alle den Reifen (4) berühren,
wobei das Rad (3) **dadurch gekennzeichnet ist, dass** das mittige Element (11) aufweist:
- eine innere Lage, die metallische Fasern aufweist;
- eine mittlere Lage, die Polyamidfasern aufweist; und
- eine äußere Lage, die Gummi aufweist.

2. Rad nach Anspruch 1, wobei das mittige Element (11) eine Mehrzahl von radialen Zähnen aufweist.

3. Rad nach einem der vorhergehenden Ansprüche, wobei jedes der seitlichen Elemente (12) ein Hauptelement (12a) mit einer Polyurethanform und eine Umhüllung (12b) aufweist, die das Hauptelement (12a) straff umschließt.

4. Rad nach einem der vorhergehenden Ansprüche, wobei jedes der seitlichen Elemente (12) in Kontakt mit dem mittigen Element (11) zusammenwirkt.

5. Rad nach einem der vorhergehenden Ansprüche, wobei die Felge (5) einen ringförmigen Abschnitt (5a) und ein Paar von Randabschnitten (5b) aufweist, wobei die Felge (5) einen Sitz (6) definiert, der in einer Richtung zwischen den Randabschnitten (5b) begrenzt ist und radial von einer Seite durch den ringförmigen Abschnitt (5a) begrenzt ist und zu dem geschlossenen Raum (7) hin an der gegenüberliegenden Seite geöffnet ist, wobei die Sicherheitsvorrichtung (8) in dem Sitz (6) aufgenommen ist, so dass sie sich, wenn sie luftgefüllt ist, in den geschlossenen Raum (7) ausdehnen kann.

6. Rad nach einem der vorhergehenden Ansprüche, das des Weiteren Kanäle (9) aufweist, die dazu eingerichtet sind, die fluidische Kommunikation zwischen der Sicherheitsvorrichtung (8) und einer unter Druck stehenden Fluidquelle des Fahrzeugs zu ermöglichen.

7. Rad nach einem der vorhergehenden Ansprüche, das des Weiteren Sensorvorrichtungen aufweist, die dazu eingerichtet sind, den Druck innerhalb des geschlossenen Raums (7) zu erfassen.

8. Rad nach Anspruch 7, wenn dieser von Anspruch 6 abhängig ist, das des Weiteren eine elektrische Einheit aufweist, die elektrisch mit den Sensorvorrichtungen verbunden ist und dazu eingerichtet ist, den erfassen Druck mit einem Referenzdruck, der in der elektrischen Einheit gespeichert ist, zu vergleichen, wobei die elektrische Einheit den Durchfluss von Fluid von der Quelle zu der Sicherheitsvorrichtung (8) ermöglicht, wenn der erfasste Druck in Bezug zu dem Referenzdruck niedriger ist.

9. Fahrzeug (1) mit einem Fahrgestell (3) und einer Mehrzahl von Rädern (3) nach einem der vorhergehenden Ansprüche.

10. Fahrzeug (1) mit einem Fahrgestell (3), einer Mehrzahl von Rädern (3) nach einem der Ansprüche 1 bis 7, einer Druckquelle und einer elektrische Einheit, die dazu eingerichtet ist, elektrisch mit den Sensorvorrichtungen verbunden zu sein und dazu eingerichtet ist, den erfassten Druck mit einem Referenzdruck, der in der elektrischen Einheit gespeichert ist, zu vergleichen, wobei die elektrische Einheit den Durchfluss von Fluid von der Quelle zu der Sicherheitsvorrichtung (8) ermöglicht, wenn der erfasste Druck in Bezug zu dem Referenzdruck niedriger ist.

## Revendications

1. Roue (3) pour véhicule (1) comprenant une jante (5) configurée pour être couplée à un moyeu dudit véhicule et un pneu (4) coopérant au contact de ladite jante (5) pour définir un espace fermé (7) par rapport à ladite jante (5), ledit espace fermé (7) étant configuré pour contenir de l'air comprimé pour supporter ledit véhicule (1) par rapport au sol, ladite roue (3) comprenant des moyens de sécurité (8) logés dans ledit espace fermé (7) et configurés pour être gonflés lorsque la pression dans ledit espace fermé (7) diminue en dessous d'un seuil prédéfini, lesdits moyens de sécurité (8) comprennent un élément central (11) et un premier et un second éléments latéraux (12) respectivement interposés en avant et en arrière dudit élément central (11), ledit élément central (11) et lesdits éléments latéraux (12) étant réalisés dans des matériaux différents, ledit élément central (11) étant configuré pour être gonflé lorsque la pression dans ledit espace fermé (7) diminue en dessous d'un seuil prédéfini, ledit élément central (11) portant lesdits éléments latéraux (12) à s'étendre avec ledit élément central (11) jusqu'à ce qu'ils soient tous en contact avec ledit pneu (4),
la roue (3) est **caractérisée en ce que** ledit élément central (11) comprend :
- une couche interne comprenant des fibres métalliques ;
- une couche intermédiaire comprenant des fibres de polyamide ; et
- une couche extérieure en caoutchouc.

2. Roue selon la revendication 1, dans laquelle ledit élément central (11) comprend une pluralité de dents radiales.

3. Roue selon l'une quelconque des revendications précédentes, dans laquelle chacun desdits éléments latéraux (12) comprend un élément central (12a) en polyuréthane et un boîtier (12b) entourant de manière étanche ledit élément central (12a).

4. Roue selon l'une quelconque des revendications précédentes, dans laquelle chacun desdits éléments latéraux (12) coopère au contact dudit élément central (11).

5. Roue selon l'une quelconque des revendications précédentes, dans laquelle ladite jante (5) comprend une partie annulaire (5a) et une paire de parties de bord (5b), ladite jante (5) définissant un siège (6) délimité dans une direction entre lesdites parties de bord (5b) et délimité radialement d'un côté par ladite partie annulaire (5a) et ouvert audit espace fermé (7) du côté opposé, lesdits moyens de sécurité (8) étant logés dans ledit siège (6) de sorte qu'ils peuvent se dilater, lorsqu'ils sont gonflés, dans ledit espace fermé (7).

6. Roue selon l'une quelconque des revendications précédentes, comprenant en outre des canaux (9) configurés pour permettre la communication fluidique entre lesdits moyens de sécurité (8) et une source de fluide sous pression dudit véhicule.

7. Roue selon l'une quelconque des revendications précédentes, comprenant en outre des moyens de détection configurés pour détecter la pression à l'intérieur dudit espace fermé (7).

8. Roue selon la revendication 7 lorsqu'elle dépend de la revendication 6, comprenant en outre une unité électronique connectée électriquement auxdits moyens de détection et configurée pour comparer ladite pression détectée à une pression de référence mémorisée dans ladite unité électronique, ladite unité électronique permettant le passage de fluide de ladite source auxdits moyens de sécurité (8) lorsque ladite pression détectée est inférieure par rapport à ladite pression de référence.

9. Véhicule (1) comprenant un châssis (3) et une pluralité de roues (3) selon l'une quelconque des revendications précédentes.

10. Véhicule (1) comprenant un châssis (3), une pluralité de roues (3) selon l'une quelconque des revendications 1 à 7, une source de pression et une unité électronique configurée pour être connectée électriquement auxdits moyens de détection et configurée pour comparer ladite pression détectée à une pression de référence mémorisée dans ladite unité électronique, ladite unité électronique permettant le passage de fluide de ladite source vers lesdits moyens de sécurité (8) lorsque ladite pression détectée est inférieure par rapport à ladite pression de référence.
